Europäisches Patentamt

European Patent Office

Office européen des brevets

(19)

(11) Veröffentlichungsnummer : **0 438 373 B1**

(12) **EUROPÄISCHE PATENTSCHRIFT**

(45) Veröffentlichungstag der Patentschrift :
**28.09.94 Patentblatt 94/39**

(51) Int. Cl.$^5$ : **G01L 13/02**

(21) Anmeldenummer : **91810001.7**

(22) Anmeldetag : **03.01.91**

(54) **Differenzdruckmesser.**

(30) Priorität : **18.01.90 CH 166/90**

(43) Veröffentlichungstag der Anmeldung :
**24.07.91 Patentblatt 91/30**

(45) Bekanntmachung des Hinweises auf die
Patenterteilung :
**28.09.94 Patentblatt 94/39**

(84) Benannte Vertragsstaaten :
**CH DE FR GB IT LI NL SE**

(56) Entgegenhaltungen :
**DE-A- 1 798 200**
**DE-A- 3 621 795**
**DE-C- 2 623 994**
**DE-C- 2 840 286**

(56) Entgegenhaltungen :
**DE-C- 2 951 854**
**FR-A- 1 124 199**
**FR-A- 2 487 516**
**US-A- 3 822 596**
**US-A- 4 285 244**

(73) Patentinhaber : **WIRTH GALLO MESSTECHNIK
AG**
**Sonnenbergstrasse 55**
**CH-8032 Zürich (CH)**

(72) Erfinder : **Wirth, Johannes**
**Sonnenbergstrasse 55**
**CH-8032 Zürich (CH)**

(74) Vertreter : **Salgo, Reinhold Caspar, Dr.**
**Patentanwalt**
**Toebelistrasse 88**
**CH-8635 Duernten (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf einen Differenzdruckmesser mit zwei im gleichen Gestell befestigten Membranen zur Messung der Druckdifferenz von Flüssigkeiten oder Gasen, wobei jede Membran je eine unabhängige Druckkammer abschliesst.

Vorrichtungen dieser Gattung sind mehrere bekannt, so z.B. aus den folgenden Druckschriften: Den US PS 3 822 596; US PS 4 285 244; den DE C2 26 23 994, 28 40 286, 29 51 854; der DE Al 36 21 795 und des FR-A- 2 487 516.

Die zum Stand der Technik gehörenden Vorrichtungen können in mehrere Klassen gegliedert werden:

- Es sind zwei unabhängige Druckmesser vorhanden, deren Messresultate als elektrische Grössen vorliegen; die Differenz wird elektrisch auf rein rechnerischem Wege gebildet,
- oder die Membranen sind am gleichen Gestell befestigt und miteinander gekoppelt. Dann liegen folgende Hauptklassen vor:
  - Die Kopplung zwischen den Membranen besteht aus einem starren Stab, dessen gestellbezogener Weg ein Mass ist für die Druckdifferenz. Entweder wird dieser Weg auf kapazitive oder induktive Art oder über Dehnungsmessstreifen gemessen, oder auf elektrischem oder mechanischem Wege weiterverarbeitet, oder auf bekannte Art elektromagnetisch kompensiert.
  - Die Kopplung zwischen den Membranen wird durch ein weitgehend inkompressibles Fluid vorgenommen: Die Verformung jeder Membran, die wiederum als Weg gegenüber dem Gestell in Erscheinung tritt, ist dann im wesentlichen nur Funktion der Differenz der beiden Drücke, die je auf eine Membran wirken. Diese Verformung wird dann beispielsweise mit Dehnungsmessstreifen registriert.

Geräte dieser bekannten Gattungen sind oft sehr einfach und robust konstruiert und zuverlässig in Handhabung und Gebrauch. Solange die Ansprüche an die Genauigkeit der Messung beschränkt sind, vermögen sie auch zu befriedigen. Sobald jedoch diese Ansprüche hoch sind hinsichtlich der absoluten, als auch hinsichtlich der relativen Genauigkeit (Einheit der Druckdifferenz/Bereich des grösseren der beiden Drücke), vermögen die bekannten Vorrichtungen nicht mehr zu genügen:

Einerseits ist der Einsatz präziserer Sensoren aus Platzgründen umständlich, wenn nicht ausgeschlossen, anderseits sind Herstellungstoleranzen in der Nachgiebigkeit der Membranen - die sich als Abhängigkeit des Resultates (Druckdifferenz) vom Wert der zwei Drücke äussert - nur schwer, mit grossem Aufwand, oder gar unmöglich zu justieren.

Die Aufgabe, die mit der vorliegenden Erfindung gelöst werden soll, ist die Schaffung eines Differenzdruckmessers für Flüssigkeiten und Gase, der unabhängig vom absoluten Wert der beiden Drucke eine hohe Messgenauigkeit für deren Differenz aufweist, einfach im Aufbau und kostengünstig in der Herstellung und insbesondere leicht zu justieren ist.

Die Lösung der gestellten Aufgabe ist wiedergegeben im Patentanspruch 1. Anhand der beiliegenden Zeichnung ist ein Ausführungsbeispiel der Erfindung schematisch dargestellt. Es zeigen

Fig. 1    ein Ausführungsbeispiel in schematischer Seitenansicht, teilweise im Schnitt
Fig. 2    einen Aussschnitt von Fig. 1 in perspektivischer Ansicht,
Fig. 3    eine schematische Darstellung des kinematischen Verhaltens,
Fig. 4    ein erstes Ausführungsbeispiel eines Details von Fig. 1
Fig. 5    ein zweites Ausführungsbeispiel eines Details von Fig. 1
Fig. 6    die schematische Darstellung einer zweiten erfindungsgemässen Justiermöglichkeit
Fig. 7    eine Variante zu Fig. 1 und 2.

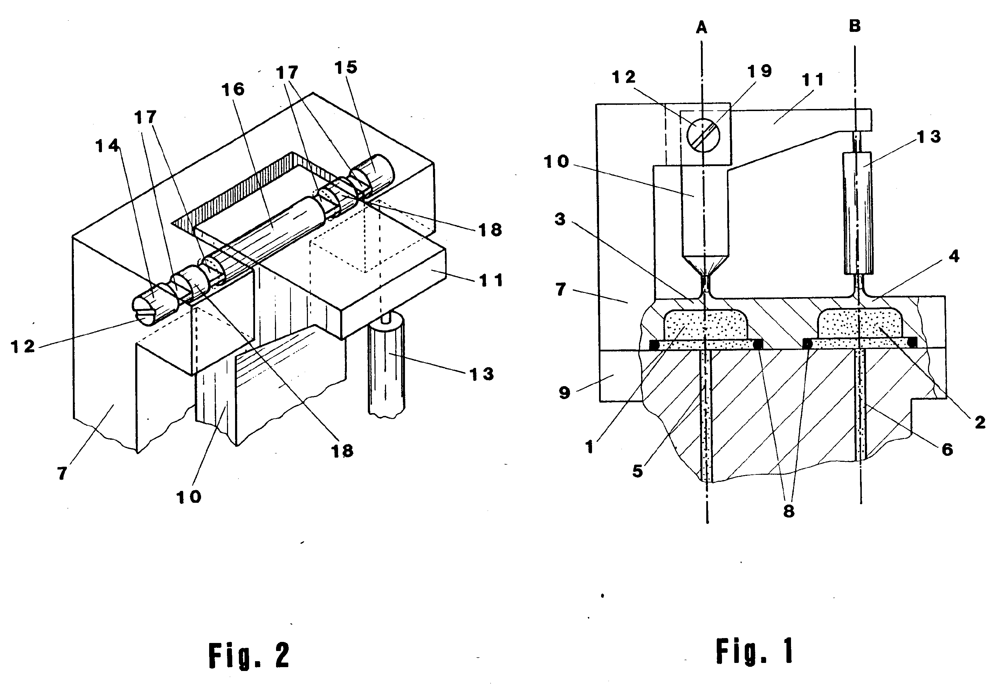

Im Ausführungsbeispiel gemäss Fig. 1 sind zwei Druckkammern 1,2 in einem Gestell 7 angeordnet. Sie sind hier, im Sinne eines Beispiels, aus dem Gestell 7 beispielsweise durch Fräsen herausgearbeitet, hinten mittels einer Platte 9 abgeschlossen und mit O-Ringen 8 abgedichtet. Die Druckkammern 1,2 sind oben mit zwei Membranen 3,4 abgeschlossen. Typischerweise sind die Druckkammern 1,2 - und damit auch die Membranen 3,4 - kreisrund mit Achsen A,B, die im wesentlichen parallel laufen, dergestalt dass die Bewegungsrichtungen der Zentren der Membranen 3,4 mit den genannten Achsen A,B zusammenfallen. Die Bewegung der Membran 3 wird auf einen abgewinkelten Stab 10 übertragen; diejenige der Membran 4 auf den unteren Anschluss eines Sensors 13. Dieser ist prinzipiell ein Wegsensor. Als Wegsensoren kommen optische, elektromagnetische, kapazitive Sensoren in Betracht; anstelle des Weges kann selbstverständlich auch die Kraft zwischen den zwei Anschlüssen gemessen werden, solange die Nachgiebigkeit des Kraftsensors - beispielsweise durch Serieschaltung von Elastizitäten - klein ist gegenüber den Nachgiebigkeiten der Membranen 3,4.

Als Kraftmesser kommen dann solche mit Dehnungsmessstreifen, mit mindestens einer schwingenden Saite oder elektromagnetische Kompensatoren in Frage.

Die Fluide, deren Druckdifferenz zu ermitteln ist, werden nun den Druckkammern 1,2 durch Druckleitungen 5,6 zugeführt. Dadurch biegen sich die Membranen 3,4 nach oben aus. Der Stab 10, ist unten an der Membran 3 befestigt und oben durch ein elastisches Element 12 mit der Funktion eines Lenkers gegenüber dem Gestell 7 parallelgeführt. Er weist eine Auskragung 11 auf, die die von der Membran 3 an den Stab 10 übertragene Bewegung an den oberen Anschluss des Sensors 13 weitergibt. Der Sensor 13 registriert also die Wegdifferenz seiner beiden Anschlüsse. Das elastische Element 12, das anhand der nachfolgenden Figuren eingehender beschrieben ist, stellt in bezug auf die Membran 3 einen elastischen Nebenschluss dar und ist, entsprechend seiner Drehlage bezüglich seiner Längsachse, in der Lage, die Bewegung des Stabes geringfügig zu beeinflussen. Damit können Ungleichheiten der Nachgiebigkeiten der Membranen 3,4 justiert werden. Ist es sonst das Ziel, bei Druckdifferenzmessgeräten mit zwei Membranen diese so gut wie möglich gleich zu machen, wird dieses Ziel hier absichtlich preisgegeben: Die Membran 3 wird um einen vorgegebenen Betrag nachgiebiger gestaltet als die Membran 4, wobei diese Vorgabe nicht besonders genau einzuhalten ist. Die Ungleichheit der Elastizitäten wird dann durch Drehen des elastischen Elementes 20 angepasst. Nach Anpassung legen die beiden Anschlüsse des Sensors 13 - unter der Voraussetzung gleicher Drücke - exakt denselben Weg zurück: Es wird keine Wegdifferenz registriert,falls die Druckdifferenz null ist.

In Fig. 2, die das gleiche Ausführungsbeispiel in perspektivischer Darstellung zeigt, ist das elastische Element 12 phantomartig eingezeichnet. Es ist gegliedert in neun Abschnitte: Zwei äussere zylindrische Abschnitte 14,15, einen mittleren zylindrischen Abschnitt 16, vier Abschnitte 17 mit im wesentlichen rechteckigem Querschnitt, die an die zylindrischen Abschnitte 14,15, und 16 anschliessen, und zwei wiederum zylindrische Abschnitte 18, die jeweils zwischen zwei Abschnitte 17 eingefügt sind. Das wesentliche an den Abschnitten 17 ist, dass sie zwei stark unterschiedliche Trägheitsachsen aufweisen oder, mit anderen Worten: Eine nicht kreisförmige - vorzugsweise stark längliche - Trägheitsellipse. Damit kommen anstatt rechteckige auch andere Querschnitte mit gleichen elastischen Eigenschaften in Frage: Beispielsweise kreissegmentförmige und linsenförmige.

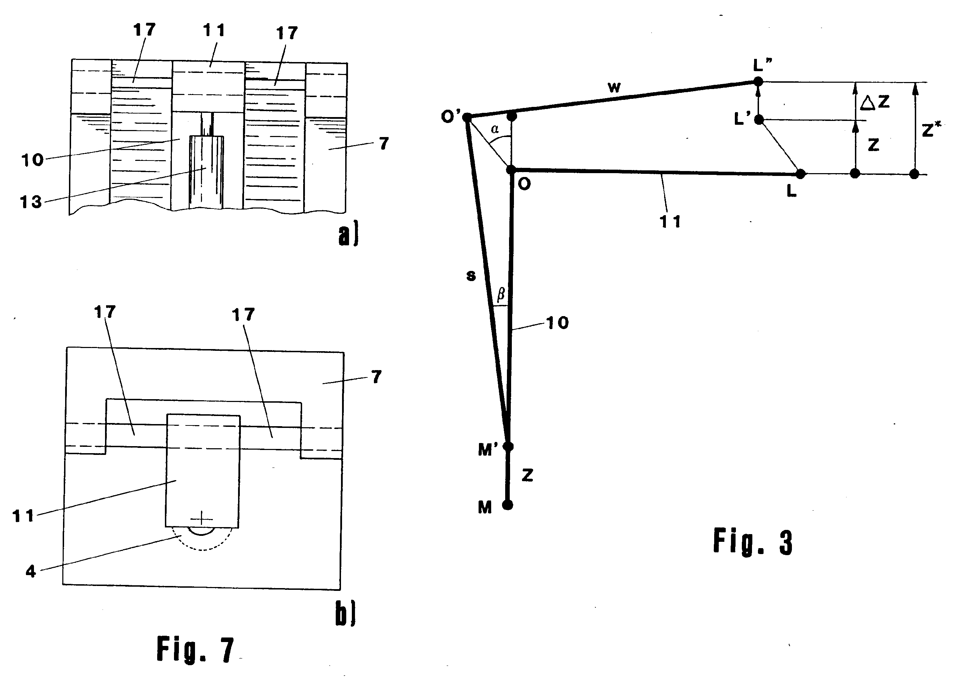

Erfolgt nun eine Bewegung der Membran 3 nach oben, so ist die Bewegung des Stabes 10 und der Auskragung 11 nur dann parallel zu den Achsen A,B, als die schwächere Trägheitsachse der Abschnitte 17 ebenfalls in diese Richtung weist. Wird das elastische Element 12, das an seinem äusseren Abschnitt 14 einen Schlitz 19 aufweist, mit Hilfe eines Schraubenziehers um einen bestimmten Betrag beispielsweise im Gegenuhrzeigersinne um den Winkel verdreht, so nimmt einerseits die effektive Biegehärte des Elementes 12, die parallel geschaltet ist zur Härte der Membran 3, etwas zu, anderseits führt der Stab 10 eine Drehung um den Winkel $\alpha$ aus. Bevor diese Verhältnisse anhand von Fig. 3 näher erläutert werden, ist noch hinzuzufügen, dass der Schlitz 19 selbstverständlich durch andere Formschlusselemente ersetzt werden kann, wie Innensechskant, Kreuzschlitz und dergleichen, ebenfalls unter Ersatz des Schraubenziehers durch ein hiefür geeignetes Instrument.

Der Stab 10 mit Auskragung 11 ist in Fig. 3 dargestellt als Strecke $\overline{MO}$ mit darauf senkrecht stehenden Strecke $\overline{OL}$. Verschiebt sich das Zentrum M der Membran 3 um den Weg Z nach oben (von M zu M'), und ist die schwächere Trägheitsachse des Elementes annähernd um den Winkel $\alpha$ gegenüber der Achse A geneigt, so wandert das Zentrum des Abschnittes 16 von O nach O'. Dadurch wandert der Punkt L nicht nur um die Distanz Z nach oben, sondern wird noch nach L'' verschwenkt. Da $\overline{MM'} \ll \overline{MO}$ ist auf jeden Fall$\beta \ll 1$ und damit $\overline{OD} = \overline{OO'}.\cos\alpha \cong \overline{MM'}$.Daher ist auch $\overline{LL'}.\cos\alpha = Z$.

Der durch die Neigung $\beta$ bedingte Zusatz $\overline{L'L''} = \Delta Z$ ermittelt sich dann aus folgenden Ueberlegungen:

Es sei $h_m$ die Härte der Membran 3; $h_o$ die kombinierte Biegehärte der Abschnitte 17 in Richtung $\overline{OO'}$, also jener der schwächeren Trägheitsachse. Ist die Trägheitsellipse der Abschnitte 17 sehr langgestreckt - was hier beabsichtigt ist - so ist die Biegehärte in der zu $\overline{OO'}$ senkrechten Richtung grösser. Der Satz über die Konstanz der virtuellen Arbeit liefert eine Biegehärte der Abschnitte 17 in Richtung $\overline{OD}$ von $h_o/\cos^2\alpha$. Die Gesamthärte $h_t$ der Parallelschaltung in Richtung $\overline{MO}$ beträgt dann

$$h_t = h_m + h_o/\cos^2\alpha = h_m (1 + a/\cos^2\alpha)$$

mit

$$a = h_o/h_m .$$

Daraus ergibt sich für Z

$$Z = p_l/h_m (1 + a/\cos^2\alpha) \cong \frac{p_l}{h_m} (1 - a/\cos^2\alpha)$$

mit $p_l$ = Druck in der Druckkammer l und $a \ll 1$.

Da $\beta \neq 0$ ergibt sich für den Punkt L zusätzlich zur Verschiebung um Z noch eine um $\Delta Z$, die aus der Drehung des Stabes 10 herrührt.

Ist

$$O'D = Z.\tan\alpha = s.\sin\beta,$$

ferner

$$\Delta Z = w.\sin\beta,$$

so folgt

$$\Delta Z = Z.(w/s).\tan\alpha = Z.b.\tan\alpha$$

mit

$$b = w/s$$

Daraus ergibt sich für die gesamte Verschiebung des Punktes L, des oberen Anschlusses des Sensors 13, nach oben:

$$Z* = Z + \Delta Z = Z.(l + b.\tan\alpha) \approx (p_l/h_m).(l - a/\cos^2\alpha).(1 + b.\tan\alpha).$$

Die erste Klammer enthält implizite eine variable Biegehärte, und ihr Vorzeichen bleibt auch erhalten, wenn $\alpha$<O, also der Punkt O' - gemäss Fig. 3 - rechts von D zu liegen kommt. Die zweite Klammer ist rein geometrischer Natur und ändert ihr Vorzeichen mit $\alpha$. Daher kommt diesem Glied vorherrschende Bedeutung zu.

Da der Elastizitäts-Term $a/\cos^2\alpha$<<1, erfolgt die Justierung also vorwiegend über den kinematischen Term $b.\tan\alpha$.

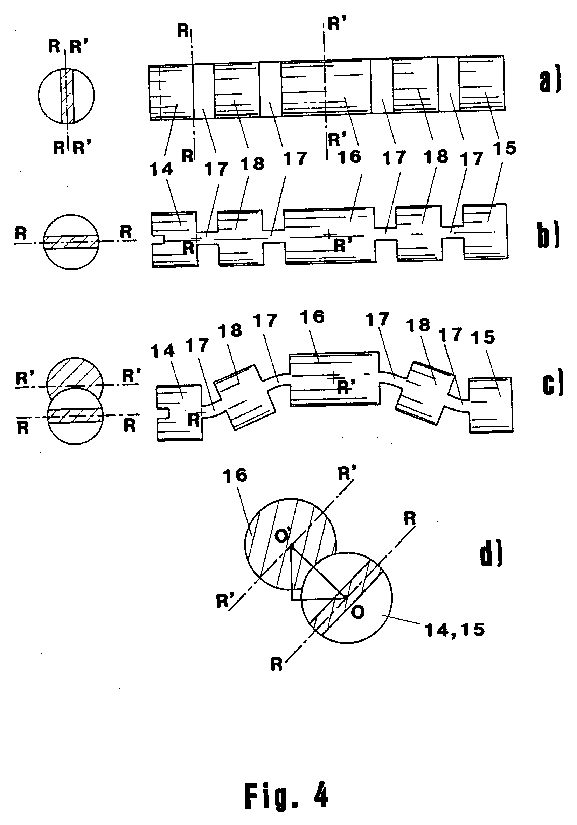

In den Fig. 4a,b,c,d ist das elastische Element 12 von Fig. 2 detailliert in mehreren Ansichten dargestellt. Fig. 4a und 4b zeigen das Element 12 in Auf- und Seitenansicht. Mit RR bzw. R'R' sind zwei Schnitte bezeichnet: Der erste durch die Wurzel des ersten Abschnittes 17, der zweite durch die Mitte des Abschnittes 16. Fig. 4c nun zeigt - stark überhöht - das Element 12 unter Belastung. Die Abschnitte 17 werden gebogen, wobei der Krümmungsradius jedes Abschnittes 17 jeweils nur auf eine Seite weist.

In Fig. 4d sind die Schnitte RR bzw. R'R' so dargestellt, dass sie der Fig. 3 entsprechen.

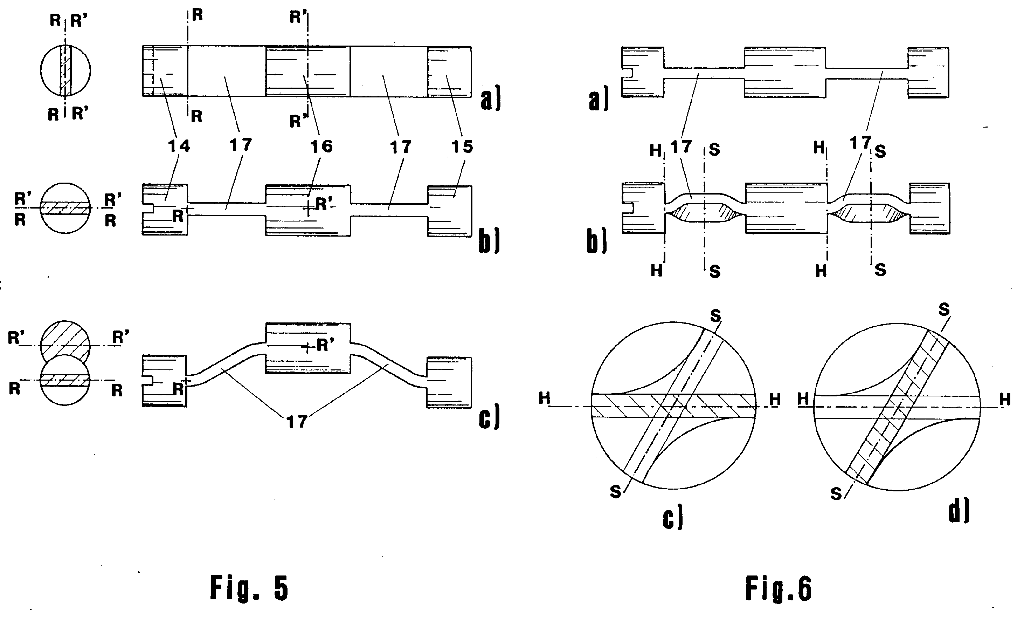

Eine Variante des Elementes 12 ist in den Fig. 5a,b,c dargestellt. Es besteht nur aus fünf Abschnitten: Den zwei äusseren Abschnitten 14,15 dem mittleren zylindrischen Abschnitt 16 und zwei Abschnitten 17 mit im wesentlichen rechteckigem Querschnitt, bzw. länglicher Trägheitsellipse. Fig. 5a,b zeigen das Element 12 wiederum in Aufsicht und Seitenansicht, während Fig. 5c - stark überhöht - das Element 12 bei Belastung darstellt. Die Abschnitte 17 sind hierbei S-förmig gebogen.

Im dem den Fig. 1 bis 5 zugrundeliegenden Ausführungsbeispiel wird von folgenden Voraussetzungen ausgegangen: Bei jeder möglichen Konfiguration von Sitzen des elastischen Elementes 12 im Gestell 7 und dem Stab 10 ist die Drehbarkeit des Elementes 12 ohne verbleibende Torsion möglich. Dafür ist, je nach der Art des Sitzes, eine Feststellung des elastischen Elementes 12 gegenüber dem Gestell 7 und dem Stab 10 gegebenenfalls erforderlich, sowohl bei der Eichung, als auch im Betrieb. Eine Ausführungs-variante (ohne Zeichnung) hiezu besteht darin, die zylindrischen Abschnitte 14,15,16 beispielsweise mit Stellschrauben festzuklemmen. Die Eichung hat dann mit festgestelltem Element 12 zu erfolgen.

Eine Variante hiezu ist in Fig. 6a gezeichnet. Hier wird das Element 12, das nach Fig. 5 aufgebaut ist, in neutraler Lage, dh. mit $\alpha$ = O festgestellt (Fig. 6a). Dann werden die Abschnitte 17 in der dargestellten Weise, mit einem geeigneten Instrument, plastisch verformt. Die Fig. 6c, d zeigen die Schnitte in den Ebenen HH und SS. Zu dieser Ausführungs-und Justierform gilt annäherungsweise dasselbe, wie das zu den Fig 4 und 5 ausgesagte.

Eine Variante zum Element 12 ist in Fig. 7 dargestellt. Hier ist das Gestell 7, der Stab 10 mit Auskragung 11 und die beiden Abschnitte 17 aus einem Stück gefertigt; die Abschnitte 14,15 sind also Teil des Gestells 7 und der Abschnitt 16 Teil des Stabes 10. Vom elastischen Element 12 bleiben also nur die zwei Abschnitte 17. Die Justierung des Druckdifferenz-Messgerätes erfolgt, wie anhand von Fig. 6 gezeigt, durch plastische Verformung der Abschnitte 17.

## Patentansprüche

1. Differenzdruckmesser zur Messung der Druckdifferenz von Flüssigkeiten oder Gasen, mit einer ersten und einer zweiten im gleichen Gestell (7) befestigten Membran (3,4), wobei die erste Membran (3) eine erste Druckkammer (1) und die zweite Membran eine zweite Druckkammer (2) abschließt und die beiden Druckkammern (1,2) unabhängig voneinander sind, dadurch gekennzeichnet, dass

- die beiden Druckkammern (1,2) am Gestell (7) nebeneinander angeordnet sind, die erste Druckkammer (1) eine erste Achse (A) aufweist, die zweite Druckkammer (2) eine zweite Achse (B) aufweist, und die erste und zweite Achse (A,B) im wesentlichen parallel zueinander verlaufen, wobei die erste Achse (A) auch die Achse der ersten Membran (3) und die zweite Achse (B) auch die Achse der zweiten Membran (4) ist, und dass die Bewegungsrichtungen der beiden Membranen (3,4) bei Druckänderungen gleichen Vorzeichens gleichsinnig in den Richtungen der ersten bzw. zweiten Achsen (A, B) verlaufen,

- ein stabförmiger Bauteil (10) vorhanden ist, dessen eine Seite mit der ersten Membran (3) verbunden ist und dessen andere Seite mittels eines langgestreckten biegeelastischen Elementes (12) am Gestell (7) angeschlossen ist,

- die Längsachse des biegeelastischen Elementes (12) im wesentlichen senkrecht auf der ersten Achse (A) steht und das biegeelastische Element (12) mindestens zwei Abschnitte (17) mit nicht-kreisförmiger Trägheitsellipse aufweist, und
- ein Sensor (13) vorhanden ist, dessen einer Anschluss sich am Zentrum der zweiten Membran (4) und dessen anderer Anschluss sich an einer Auskragung (11) des stabförmigen Bauteils (10) befindet, wobei die Auskragung (11) im wesentlichen senkrecht sowohl auf der Achse des stabförmigen Bauteils (10), als auch auf der Längsachse des biegeelastischen Elementes (12) steht, und der Sensor (13) derart ausgebildet ist, daß er die Wegdifferenz seiner beiden Anschlüsse misst, welche beide auf der zweiten Achse (B) liegen.

2. Differenzdruckmesser nach Patentanspruch 1, dadurch gekennzeichnet, dass das elastische Element (12) als Ganzes um seine Längsachse drehbar ist.

3. Differenzdruckmesser nach Patentanspruch 2, dadurch gekennzeichnet, dass das elastische Element (12) aus neun Abschnitten besteht, nämlich zwei äusseren zylindrischen Abschnitten (14, 15), einem mittleren zylindrischen Abschnitt (16), vier Abschnitten (17) mit einem Querschnitt mit nicht-kreisförmiger Trägheitsellipse, die sowohl an die Abschnitte (14, 15), als auch an den Abschnitt (16) angrenzen, und zwei wiederum zylindrischen Abschnitten (18), die sich zwischen je zwei Abschnitten (17) befinden, und dass die entsprechenden Trägheitsachsen der vier Abschnitte (17) in die gleiche Richtung laufen.

4. Differenzdruckmesser nach Patentanspruch 2, dadurch gekennzeichnet, dass das elastische Element (12) aus fünf Abschnitten besteht, nämlich zwei äusseren zylindrischen Abschnitten (14, 15), einem mittleren zylindrischen Abschnitt (16) und zwei Abschnitten (17) mit einem Querschnitt mit nicht-kreisförmiger Trägheitsellipse, die zwischen die Abschnitte (14, 16) einerseits und die Abschnitte (15, 16) eingefügt sind, und dass die entsprechenden Trägheitsachsen der zwei Abschnitte (17) in die gleiche Richtung laufen.

5. Differenzdruckmesser nach Patentanspruch 3 oder 4, dadurch gekennzeichnet, dass der äussere Abschnitt (14) ein solches Formschlusselement aufweist, dass das elastische Element (12) mittels eines hiefür geeigneten Instrumentes um seine Längsachse gedreht werden kann.

6. Differenzdruckmesser nach Patentanspruch 3, 4 oder 5, dadurch gekennzeichnet, dass der Querschnitt des Abschnittes (17) mit nichtkreisförmiger Trägheitsellipse im wesentlichen rechteckig ist.

7. Differenzdruckmesser nach Patentanspruch 3, 4 oder 5, dadurch gekennzeichnet, dass der Querschnitt des Abschnittes (17) mit nichtkreisförmiger Trägheitsellipse die Form eines Kreissegmentes hat.

8. Differenzdruckmesser nach Patentanspruch 3, 4 oder 5, dadurch gekennzeichnet, dass der Querschnitt des Abschnittes (17) mit nichtkreisförmiger Trägheitsellipse linsenförmig ist.

9. Differenzdruckmesser nach Patentanspruch 5, dadurch gekennzeichnet, dass das elastische Element (12) zum Justieren als Ganzes drehbar angeordnet ist.

10. Differenzdruckmesser nach Patentanspruch 4, dadurch gekennzeichnet, dass die Abschnitte (17) bei feststehenden Abschnitten (14, 15, 16) zum Justieren plastisch verformt werden.

11. Differenzdruckmesser nach Patentanspruch 1, dadurch gekennzeichnet, dass das Gestell (7), die beiden Druckkkammern (1, 2) mit den Membranen (3, 4), der Stab (10) mit Auskragung (11) und die beiden Abschnitte (17) des elastischen Elementes (12) durch spanende Bearbeitung aus einem Stück gefertigt sind, und die Justierung durch plastische Verformung der genannten Abschnitte (17) erfolgt.

12. Differenzdruckmesser nach einem der Patentansprüche 1 bis 11, dadurch gekennzeichnet, dass der Sensor (13) ein elektromagnetischer Wegmesser ist.

13. Differenzdruckmesser nach einem der Patentansprüche 1 bis 11, dadurch gekennzeichnet, dass der Sensor (13) ein kapazitiver Wegmesser ist.

14. Differenzdruckmesser nach einem der Patentansprüche 1 bis 11, dadurch gekennzeichnet, dass der Sensor (13) ein Kraftmesser mit Dehnungsmessstreifen ist.

15. Differenzdruckmesser nach einem der Patentansprüche 1 bis 11, dadurch gekennzeichnet, dass der Sensor (13) ein Kraftmesser mit. mindestens einer querschwingenden Saite ist.

16. Differenzdruckmesser nach einem der Patentansprüche 1 bis 11, dadurch gekennzeichnet, dass der Sensor (13) ein elektromagnetischer Kraftkompensator ist.

## Claims

1. A differential pressure gauge for the measurement of the differential pressure of fluids or gases, with a first and second diaphragm (3, 4) secured in the same frame (7), whereby the first diaphragm (3) seals a first pressure chamber (1) and the second diaphragm seals a second pressure chamber (2), with both pressure chambers (1, 2) independent of each other, characterised in that
   - both pressure chambers (1, 2) are arranged next to each other in the frame (7), the first pressure chamber (1) has a first axis (A) and the second pressure chamber (2) a second axis (B), and the first and second axes (A, B) extend for the most part parallel to each other, whereby the first axis (A) is the axis of the first diaphragm (3) and the second axis (B) is the axis of the second diaphragm (4) and that the direction of movement of both diaphragms (3, 4) upon changes in pressure of the same preceding sign is the same in the direction of the first or second axis (A, B),
   - a bar-shaped component (10) is provided, one side of which is joined to the first diaphragm (3) with its other side connected to the frame (7) by means of an elongated elastic element (12),
   - the longitudinal axis of the elastic element (12) is arranged for the most part at a right angle to the first axis (A) and the elastic element (12) is provided with at least two sections (17) with non-circular ellipses of inertia, and
   - a sensor (13) is provided which has one terminal in the centre of the second diaphragm (4) and its other terminal on a projection (11) of the bar-shaped component (10), whereby the projection (11) for the most part is arranged vertically to both the axis of the bar-shaped component (10) and to the longitudinal axis of the elastic element (12) and that the sensor (13) is arranged such that it measures the difference in displacement of its two terminals, both of which lie on the second axis (B).

2. A differential pressure gauge according to patent claim 1, characterised in that the elastic element (12) as a whole can be rotated about its longitudinal axis.

3. A differential pressure gauge according to patent claim 2, characterised in that the elastic element (12) comprises nine sections, namely two outer cylindrical sections (14, 15), a central cylindrical section (16), four sections (17) with a cross section having a non-circular ellipse of inertia which border both the sections (14, 15) as well as the section (16), and a further two cylindrical sections (18) positioned in each case between two sections (17), and that the corresponding axes of inertia of the four sections (17) extend in the same direction.

4. A differential pressure gauge according to patent claim 2, characterised in that the elastic element (12) comprises five sections, namely two outer cylindrical sections (14, 15) a central cylindrical section (16) and two sections (17) with a cross section having a non-circular ellipse of inertia which are inserted between the sections (14, 16) on the one hand and the sections (15, 16), and that the corresponding axes of inertia of the two sections (17) extend in the same direction.

5. A differential pressure gauge according to patent claim 3 or 4, characterised in that the outer section (14) has a positive locking element such that the elastic element (12) can be rotated about its longitudinal axis by means of a suitable instrument.

6. A differential pressure gauge according to any one of patent claims 3, 4 or 5, characterised in that the cross section of the section (17) with a non-circular ellipse of inertia is substantially rectangular.

7. A differential pressure gauge according to any one of patent claims 3, 4 or 5, characterised in that the cross section of the section (17) with a non-circular ellipse of inertia has the form of a segment of a circle.

8. A differential pressure gauge according to any one of patent claims 3, 4 or 5, characterised in that the cross section of the section (17) with a non-circular ellipse of inertia is lenticular.

9. A differential pressure gauge according to patent claim 5, characterised in that the elastic element (12) is arranged such that it can rotate in its entirety for adjustment.

10. A differential pressure gauge according to patent claim 4, characterised in that the sections (17) can be plastically deformed for adjustment if the sections (14, 15, 16) are fixed.

11. A differential pressure gauge according to patent claim 1, characterised in that the frame (7), both pressure chambers (1, 2) with the diaphragms (3, 4), the bar (10) with projection (11) and both sections (17) of the elastic element (12) are manufactured from one part by machining and that adjustment is effected through plastic deformation of the aforementioned sections (17).

12. A differential pressure gauge according to any one of patent claims 1 to 11, characterised in that the sensor (13) is an electromagnetic displacement measuring device.

13. A differential pressure gauge according to any one of patent claims 1 to 11, characterised in that the sensor (13) is a capacitive displacement measuring device.

14. A differential pressure gauge according to any one of patent claims 1 to 11, characterised in that the sensor (13) is a dynamometer with a strain gauge.

15. A differential pressure gauge according to any one of patent claims 1 to 11, characterised in that the sensor (13) is a dynamometer with at least one laterally vibrating string.

16. A differential pressure gauge according to any one of patent claims 1 to 11, characterised in that the sensor (13) is an electromagnetic force compensator.

**Revendications**

1. Manomètre différentiel pour mesurer la pression différentielle de liquides ou de gaz, comportant des première et seconde membranes (3, 4) fixées dans le même bâti (7), la première membrane (3) fermant une première chambre de pression (1) tandis que la seconde membrane ferme une seconde chambre de pression (2), et les deux chambres de pression (1, 2) étant indépendantes l'une de l'autre, caractérisé
   - en ce que les deux chambres de pression (1, 2) sont juxtaposées au niveau du bâti (7), la première chambre de pression (1) présente un premier axe (A), la seconde chambre de pression (2) présente un second axe (B) et les premier et second axes (A, B) sont sensiblement parallèles, étant précisé que le premier axe (A) est aussi l'axe de la première membrane (3) et que le second axe (B) est aussi l'axe de la seconde membrane (4), et en ce que les sens de déplacement des deux membranes (3, 4) lors de variations de pression de même signe sont identiques, dans le sens des premier et second axes (A, B),
   - en ce qu'il est prévu un composant en forme de barre (10) dont un côté est relié à la première membrane (3) tandis que l'autre côté est raccordé au bâti (7) à l'aide d'un élément élastique par flexion allongé (12),
   - en ce que l'axe longitudinal dudit élément élastique (12) est sensiblement perpendiculaire au premier axe (A) et l'élément élastique (12) comporte au moins deux sections (17) présentant une ellipse d'inertie non circulaire, et
   - en ce qu'il est prévu un détecteur (13) dont un raccordement se trouve au centre de la seconde membrane (4) tandis que l'autre raccordement se trouve au niveau d'une partie saillante (11) du composant en forme de barre (10), étant précisé que la partie saillante (11) est sensiblement perpendiculaire aussi bien à l'axe du composant en forme de barre (10) qu'à l'axe longitudinal de l'élément élastique (12), et le détecteur (13) est conçu de manière à mesurer la différence de déplacement de ses deux raccordements, qui se trouvent tous les deux sur le second axe (B).

2. Manomètre différentiel selon la revendication 1, caractérisé en ce que l'élément élastique (12) est apte à tourner dans son ensemble sur son axe longitudinal.

3. Manomètre différentiel selon la revendication 2, caractérisé en ce que l'élément élastique (12) se compose de neuf sections, à savoir deux sections cylindriques extérieures (14, 15), une section cylindrique centrale (16), quatre sections (17) à section transversale présentant une ellipse d'inertie non circulaire, qui sont voisines aussi bien des sections (14, 15) que de la section (16), et deux sections (18) cylindriques, là encore, qui se trouvent chacune entre deux sections (17), et en ce que les axes d'inertie correspondants des quatre sections (17) s'étendent dans le même sens.

4. Manomètre différentiel selon la revendication 2, caractérisé en ce que l'élément élastique (12) se compose de cinq sections, à savoir deux sections cylindriques extérieures (14, 15), une section cylindrique centrale (16) et deux sections (17) à section transversale présentant une ellipse d'inertie non circulaire, qui sont insérées d'un côté entre les sections (14, 16), et entre les sections (15, 16), et en ce que les axes d'inertie correspondants des deux sections (17) s'étendent dans le même sens.

5. Manomètre différentiel selon la revendication 3 ou 4, caractérisé en ce que la section extérieure (14) comporte un élément d'accouplement par complémentarité de forme qui permet de faire tourner l'élément élastique (12) sur son axe longitudinal à l'aide d'un instrument adéquat.

6. Manomètre différentiel selon les revendications 3, 4 ou 5, caractérisé en ce que la section transversale de la section (17) présentant une ellipse d'inertie non circulaire est sensiblement rectangulaire.

7. Manomètre différentiel selon les revendications 3, 4 ou 5, caractérisé en ce que la section transversale de la section (17) présentant une ellipse d'inertie non circulaire a la forme d'un segment de cercle.

8. Manomètre différentiel selon les revendications 3, 4 ou 5, caractérisé en ce que la section transversale de la section (17) présentant une ellipse d'inertie non circulaire est lentiforme.

9. Manomètre différentiel selon la revendication 5, caractérisé en ce que l'élément élastique (12) est disposé pour pouvoir tourner dans son ensemble, en vue de l'ajustement.

10. Manomètre différentiel selon la revendication 4, caractérisé en ce que les sections (17), avec des sections (14, 15, 16) fixes, sont soumis à une déformation plastique pour l'ajustement.

11. Manomètre différentiel selon la revendication 1, caractérisé en ce que le bâti (7), les deux chambres de pression (1, 2) avec les membranes (3, 4), la barre (10) avec la partie saillante (11) et les deux sections (17) de l'élément élastique (12) sont réalisés en une pièce par usinage par enlèvement de copeaux, et l'ajustement se fait grâce à une déformation plastique desdites sections (17).

12. Manomètre différentiel selon l'une des revendications 1 à 11, caractérisé en ce que le détecteur (13) est un capteur de déplacement électromagnétique.

13. Manomètre différentiel selon l'une des revendications 1 à 11, caractérisé en ce que le détecteur (13) est un capteur de déplacement capacitif.

14. Manomètre différentiel selon l'une des revendications 1 à 11, caractérisé en ce que le détecteur (13) est un dynamomètre à jauge extensométrique.

15. Manomètre différentiel selon l'une des revendications 1 à 11, caractérisé en ce que le détecteur (13) est un dynamomètre comportant au moins une corde vibrant transversalement.

16. Manomètre différentiel selon l'une des revendications 1 à 11, caractérisé en ce que le détecteur (13) est un compensateur de force électromagnétique.

Fig. 2

Fig. 1

EP 0 438 373 B1

Fig. 7

a)

b)

Fig. 3

EP 0 438 373 B1

Fig. 4

Fig.6

Fig. 5

12